**Europäisches Patentamt**

**European Patent Office**

**Office européen des brevets**

(19)

(11) Veröffentlichungsnummer: **0 506 160 B1**

## (12) EUROPÄISCHE PATENTSCHRIFT

(45) Veröffentlichungstag der Patentschrift: **28.06.95**

(21) Anmeldenummer: **92200600.2**

(22) Anmeldetag: **02.03.92**

(51) Int. Cl.6: **B01D  53/52**, B01D 53/86, C01B 17/04

(54) **Verfahren zur Entfernung von Schwefelwasserstoff aus Gasen mittels Aktivkohle.**

(30) Priorität: **26.03.91 DE 4109892**

(43) Veröffentlichungstag der Anmeldung:
**30.09.92 Patentblatt  92/40**

(45) Bekanntmachung des Hinweises auf die
Patenterteilung:
**28.06.95 Patentblatt  95/26**

(84) Benannte Vertragsstaaten:
**DE ES FR GB IT NL**

(56) Entgegenhaltungen:
**EP-A- 0 218 302**
**WO-A-87/02654**
**DE-A- 2 430 909**
**DE-A- 3 520 166**

(73) Patentinhaber: **METALLGESELLSCHAFT Aktiengesellschaft**
**Postfach 10 15 01,**
**Reuterweg 14**
**D-60015 Frankturt (DE)**

(72) Erfinder: **Rolke, Dietrich, Dr.**
**Thüringer Weg 43**
**W-6238 Hofheim (DE)**
Erfinder: **Cornel, Peter, Dr.**
**Eschweger Strasse 1**
**W-6000 Frankturt am Main (DE)**
Erfinder: **Lell, Rainer**
**Marköbeler Strasse 16**
**W-6369 Nidderau 5 (DE)**
Erfinder: **Stetzer, Klaus**
**Buchwaldstrasse 31**
**W-6072 Dreieich (DE)**
Erfinder: **Neuroth, Gabriele**
**Am Ameisenberg 15**
**W-6000 Frankturt am Main (DE)**

**Beschreibung**

Die Erfindung betrifft ein Verfahren zum Entschwefeln eines $H_2S$ und Wasserdampf enthaltenden Gases.

Ein Verfahren dieser Art bei dem man dem zu entschwefelnden Gas vor Durchströmen einer Aktivkohleschicht in einer Endreinigungsstufe Sauerstoff zuführt, so daß das Gas pro Mol $H_2S$ 1 bis 20 Mol $O_2$ enthält, und man das Gas mit Temperaturen im Bereich von 50 bis 180°C über die Aktivkohle leitet und auf der Aktivkohle eine Beladung erzeugt, die Elementarschwefel enthält und zu mindestens 3 Gew.% aus Schwefelsäure besteht ist aus DE-A-24 30 909 bekannt. Auch eine Katalytische Vorreinigung in einer Metalloxid enthaltenden Aktivkohleschicht ist aus dieser Schrift bekannt. Die Regeneration der Aktivkohle erfolgt mit Inertgas bei Temperaturen zwischen 300 and 550°C. Beim aus EP-A-0 218 302 bekannten Verfahren zum Reinigen von $H_2S$- und $SO_2$-haltigem Abgas arbeitet man ebenfalls zweistufig (katalytische Vorreinigung und weitere katalytische Reinigung nach Sauerstoffzufuhr) und verwendet Katalysatoren auf der Basis von $Al_2O_3$ und/oder $TiO_2$. Dabei wird Elementarschwefel, aber keine Schwefelsäure adsorbiert.

Der Erfindung liegt die Aufgabe zugrunde, eine wirksame Entschwefelung zu erreichen und die Regenerierung beladener Adsorbentien auf einfache Weise durchzuführen. Erfindungsgemäß geschieht dies beim eingangs genannten Verfahren dadurch, daß man das zu entschwefelnde Gas, dessen Gehalt an $H_2S$ + $SO_2$ mindestens 1000 ppm beträgt, bei Temperaturen von 100 bis 180°C zunächst durch eine katalytische Vorreinigung leitet, wobei man Elementarschwefel auf einem metalloxidreichen Katalysator adsorbiert, daß man das $H_2S$-haltige Gas aus der Vorreinigung nach Zumischen von Sauerstoff wie gemäß Schrift DE-A-2 430 909 durch eine Endreinigungsstufe leitet, daß man zum Regenerieren der beladenen Aktivkohle und des beladenen metalloxidreichen Katalysators einen Teilstrom des zu entschwefelnden Gases als Regeneriergas verwendet, wobei man das Regeneriergas in einem ersten Regenerierungsschritt mit einer Temperatur im Bereich von 100 bis 180°C über die beladene Aktivkohle leitet und dabei die Schwefelsäure weitgehend zu Elementarschwefel reduziert und daß man in einem zweiten Regenerierungsschritt das Regeneriergas mit Temperaturen im Bereich von 200 bis 400°C über die Aktivkohle und den metalloxidreichen Katalysator leitet und dabei den Elementarschwefel entfernt.

Vorzugsweise beträgt der Anteil der Schwefelsäure an der Gesamtbeladung der Aktivkohle 5 bis etwa 50 Gew.%. Zumeist enthält das der Aktivkohle zugeführte Gas 500 bis 5000 ppm $H_2S$.

Für den metalloxidreichen Katalysator der Vorreinigung eignen sich vor allem Substanzen, die hauptsächlich aus $Al_2O_3$ oder $TiO_2$ bestehen. Vorzugsweise sind diese Katalysatoren daneben noch mit etwa 0,5 bis 5 Gew.% Eisen, Kobalt oder Nickel imprägniert. Katalysatoren dieser Art sind an sich bekannt und z.B. im Europa-Patent 0 215 317 beschrieben.

Die mit Elementarschwefel und $H_2SO_4$ beladene Aktivkohle wird zum Regenerieren mit einem Teilstrom des zu entschwefelnden, $H_2S$-haltigen Gases behandelt. Dabei wird zunächst die Schwefelsäure zu Elementarschwefel oder teilweise auch zu Schwefeldioxid reduziert ($H_2SO_4$ + $3H_2S$ = 4S + $4H_2O$ oder $3H_2SO_4$ + $H_2S$ = $4SO_2$ + $4H_2O$) und danach wird der Elementarschwefel mit dem gleichen Gas dampfförmig entfernt. Der metalloxidreiche Katalysator der Vorreinigung ist ebenfalls zu regenerieren und es ist zweckmäßig, das der Regenerierung dienende, reduzierende Gas über die beladene Aktivkohle und den metalloxidreichen Katalysator zu leiten und mindestens einen Teil des Gases im Kreislauf zu führen. Das Regeneriergas, das Temperaturen im Bereich von 200 bis 400°C aufweist, kann dabei zuerst über die Aktivkohle oder aber über den metalloxidreichen Katalysator geleitet werden.

Ausgestaltungsmöglichkeiten des Verfahrens werden mit Hilfe der Zeichnung erläutert.

Fig. 1     zeigt ein Fließschema mit gleichzeitiger Gasreinigung und Regenerierung,

Fig. 2     zeigt eine Variante der Endreinigung.

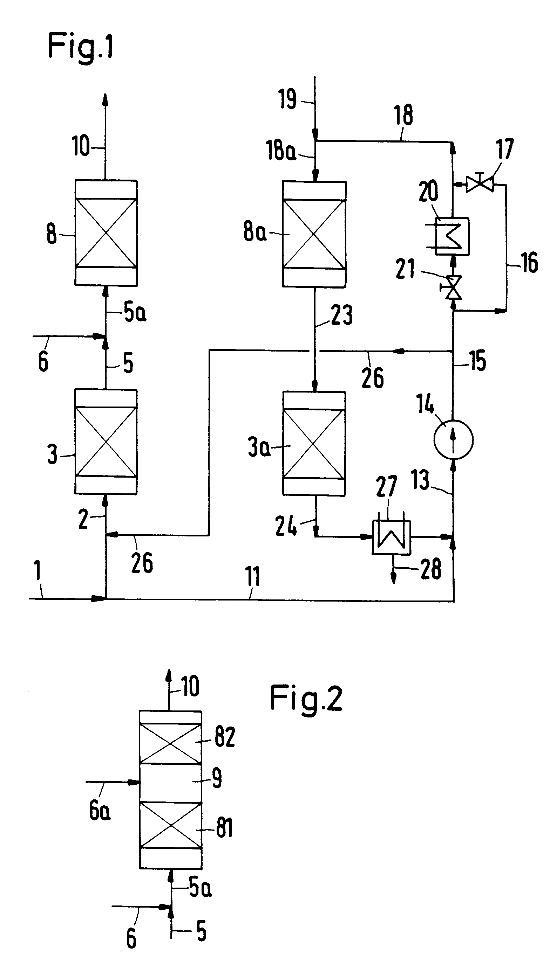

Das zu entschwefelnde, $H_2S$-haltige Gas wird gemäß Fig. 1 in der Leitung (1) herangeführt. Es enthält $SO_2$ und auch Wasserdampf und kann daneben noch andere Schwefelverbindungen wie COS und $CS_2$ enthalten. Das Gas kommt z.B. aus einer Clausanlage und weist zumeist Temperaturen von 120 bis 180°C auf. Mit diesen erhöhten Temperaturen leitet man das Gas ganz oder teilweise durch die Leitung (2) zunächst zur Vorreinigung (3), die einen metalloxidreichen Katalysator aufweist, der im Festbett angeordnet ist. Als Hauptkomponente enthält der Katalysator der Vorreinigung (3) $Al_2O_3$ oder $TiO_2$. Auf diesem Katalysator scheidet sich Elementarschwefel ab ($2H_2S$ + $SO_2$ = 3S + $2H_2O$).

Teilgereinigtes Gas verläßt die Vorreinigung (3) in der Leitung (5), es hat in vielen Fällen einen $H_2S$-Gehalt von nur noch 500 bis 3000 ppm. Diesem Gas gibt man durch die Leitung (6) Luft in dosierter Menge zu. Die Endreinigung (8) enthält ein Bett aus körniger Aktivkohle, die Korngrößen im Bereich von 1 bis 6 mm und eine BET-Oberfläche im Bereich von 500 bis 1500 $m^2/g$ aufweist. Es wird dafür gesorgt, daß auf dieser Aktivkohle in der Endreinigung (8) bei Temperaturen von 100 bis 180°C und vorzugsweise 130 bis 160°C eine Beladung aus Elementarschwefel und mindestens 3 Gew.% Schwefelsäure entsteht. Zumeist

EP 0 506 160 B1

liegt das Gewichtsverhältnis von Elementarschwefel zu Schwefelsäure in der Beladung der Aktivkohle im Bereich von 20:1 bis 1:2. Gereinigtes Gas mit einem $H_2S$-Gehalt von üblicherweise höchstens 20 ppm und vorzugsweise höchstens 8 ppm strömt in der Leitung (10) ab. Der $SO_2$-Gehalt des gereinigten Gases liegt bei höchstens 600 ppm und vorzugsweise bei höchstens 200 ppm.

Der rechte Teil der Fig. 1 zeigt die Regenerierung eines beladenen metalloxidreichen Katalysators (3a), wie er in der Vorreinigung (3) verwendet wird, und einer beladenen Aktivkohle (8a) einer Endreinigung (8). Im vorliegenden Fall verwendet man für die Regenerierung einen Teilstrom des in der Leitung (1) herangeführten $H_2S$-haltigen Gases, den man in der Leitung (11) abzweigt. Das der Regenerierung dienende Gas gelangt in die Leitung (13), wird von einem Gebläse (14) durch die Leitung (15) zu einer Bypassleitung (16) mit offenem Ventil (17) gefördert und gelangt durch die Leitungen (18) und (18a) in das Bett des beladenen Aktivkohlekatalysators (8a). Falls nötig, wird durch die Leitung (19) ein reduzierendes Fremdgas, z.B. ein $H_2S$-reiches Gas, zugemischt. In der Leitung (18a) liegt die Temperatur im Bereich von 120 bis 180 °C und vorzugsweise 130 bis 160 °C. Zum Einstellen der Temperatur dient ein Erhitzer (20), durch den man durch das mehr oder weniger geöffnete Ventil (21) bei entsprechend eingestelltem Ventil (17) einen Teilstrom des Gases leiten kann, den man erhitzt und dem Gas der Leitung (16) zumischt.

Im ersten Regenerierungsschritt wird bei Temperaturen von 120 bis 180 °C im Aktivkohlebett (8a) dafür gesorgt, daß die als Teil der Beladung vorhandene Schwefelsäure vollständig oder weitgehend zu Elementarschwefel reduziert wird.

Abströmendes Gas führt man durch die Leitung (23) zum Katalysatorbett (3a) und von dort durch die Leitung (24) über den Kühler (27) zurück zur Leitung (13). Ein Teilstrom des Gases kann man durch die Leitung (26) aus dem Kreislauf ausschleusen und dem zu behandelnden Gas der Leitung (2) zumischen.

Zum Entfernen der Elementarschwefel-Beladung von den Katalysatoren (3a) und (8a) stoppt man den Gaszufluß durch die Leitung (19) und erhöht die Temperatur im Gas der Leitungen (18) und (18a) auf 200 bis 400 °C und vorzugsweise mindestens 300 °C. Dies erreicht man dadurch, daß man das Gas der Leitung (15) durch den Erhitzer (20) leitet und den Bypass (16) drosselt. Das Elementarschwefel enthaltende Gas der Leitung (23) strömt über den metalloxidreichen Katalysator (3a) und entfernt auch hier die Elementarschwefel-Beladung. Zum Entfernen des Elementarschwefels aus dem Gas dient der Kühler (27), in dem der Elementarschwefel auskondensiert und durch die Leitung (28) entfernt wird.

Der besseren Übersichtlichkeit wegen ist die dem Fachmann geläufige Leitungsführung für den Wechsel der beladenen und der regenerierten Adsorber in der Zeichnung nicht dargestellt.

Fig. 2 zeigt die Verwendung von zwei Betten (81) und (82) mit Aktivkohle für die Endreinigung. Hierbei leitet man Luft sowohl durch die Leitung (6) vor Eintritt des Gases durch die Leitung (5a) in das erste Bett (81) als auch durch die Leitung (6a) in den Bereich (9) zwischen den Betten (81) und (82) ein. In der Leitung (5a) beträgt das Molverhältnis $H_2S:O_2$ etwa 1:1 bis 1:3 und im Bereich (9) sorgt man für ein Molverhältnis $H_2S:O_2$ von etwa 1:3 bis 1:19, bezogen auf den $H_2S$-Gehalt in der Leitung (5). Im Zwischenbereich (9) ist der $H_2S$-Gehalt im Gas bereits weitgehend verschwunden.

Beispiel

In einer Verfahrensführung gemäß Fig. 1 wird ein Abgas aus einer Clausanlage behandelt, das in einer Menge von 7545 $Nm^3$/h durch die Leitung (1) strömt. In der Vorreinigung (3) verwendet man einen $Al_2O_3$-Katalysator, der mit 1 Gew.% Nickel imprägniert ist. Die Verweilzeit des Gases beträgt in der Vorreinigung (3) 6 sec und an der Aktivkohle der Endreinigung (8) 3 sec. Durch die Leitung (6) werden 120 $Nm^3$/h Luft von 135 °C herangeführt.

Die nachfolgende Tabelle gibt Daten der Gasgemische in verschiedenen Leitungen an, dabei befinden sich die Betten (8a) und (3a) im ersten Regenerierschritt, wobei die Schwefelsäure auf der Aktivkohle (8a) reduziert wird. Bei Beginn der Regenerierung ist die Aktivkohle mit 5 Gew.% $H_2SO_4$ beladen.

3

| Leitung | 1 | 5 | 11 | 18a | 19 | 26 |
|---|---|---|---|---|---|---|
| Menge ($Nm^3/h$) | 7545 | 7564 | 200 | 2310 | 10 | 243 |
| Druck (bar) | 1,18 | 1,14 | 1,18 | 1,30 | 1,5 | 1,20 |
| Temperatur (°C) | 135 | 148 | 135 | 145 | 49 | 135 |
| Zusammensetzung: | | | | | | |
| $H_2S$ (Vol.%) | 0,85 | 0,17 | 0,85 | 0,48 | 95,4 | 0,07 |
| $SO_2$ (Vol.%) | 0,15 | 0,02 | 0,15 | 4,95 | – | 6,25 |
| $H_2O$ (Vol.%) | 34,35 | 35,08 | 34,35 | 32,81 | 3,0 | 32,52 |
| $N_2$ (Vol.%) | 58,75 | 58,82 | 58,75 | 56,08 | – | 55,58 |
| $CO_2$ (Vol.%) | 5,90 | 5,91 | 5,90 | 5,63 | 1,6 | 5,58 |
| S (kg/h) | 16,40 | 1,08 | 0,43 | 4,62 | – | 0,53 |

Das Reingas der Leitung (10) enthält noch 0,02 Vol.% $SO_2$ und 8 ppm $H_2S$. Um den Elementarschwefel von den Betten (3a) und (8a) zu entfernen, wird das Gas in der Leitung (18) auf 320°C erhitzt und der Gasstrom der Leitung (19) abgestellt. Im Kühler (27) fallen bei 135°C insgesamt 3200 kg Schwefel während einer Regenerierphase an.

**Patentansprüche**

1. Verfahren zum Entschwefeln eines $H_2S$ und Wasserdampf enthaltenden Gases indem man das zu entschwefelnde Gas, dessen Gehalt an $H_2S$ + $SO_2$ mindestens 1000 ppm beträgt, bei Temperaturen von 100 bis 180°C zunächst durch eine katalytische vorreinigung leitet, wobei man Elementarschwefel auf einem metalloxidreichen Katalysator adsorbiert, indem man dann das $H_2S$-haltige Gas aus der Vorreinigung durch eine Aktivkohle enthaltende Endreinigungsstufe leitet, wobei man dem zu entschwefelnden Gas vor der Endreinigungsstufe Sauerstoff zuführt, so daß das Gas pro Mol $H_2S$ 1 bis 20 Mol $O_2$ enthält, und man das Gas mit Temperaturen im Bereich von 50 bis 180°C über die Aktivkohle leitet und auf der Aktivkohle eine Beladung erzeugt, die Elementarschwefel enthält und zu mindestens 3 Gew.% aus Schwefelsäure besteht, und indem man zum Regenerieren der berladenen Aktivkohle und des beladenen metalloxidreichen Katalysators einen Teilstrom des zu entschwefelnden Gases als Regeneriergas verwendet, wobei man das Regeneriergas in einem ersten Regenerierungsschritt mit einer Temperatur im Bereich von 100 bis 180°C über die beladene Aktivkohle leitet und dabei die Schwefelsäure weitgehend zu Elementarschwefel reduziert und daß man in einem zweiten Regenerierungsschritt das Regeneriergas mit Temperaturen im Bereich von 200 bis 400°C über die Aktivkohle und den metalloxidreichen Katalysator leitet und dabei den Elementarschwefel entfernt.

2. Verfahren Anspruch 1, dadurch gekennzeichnet, daß die Aktivkohle auf zwei Betten verteilt ist, die vom Gas nacheinander durchströmt werden, und daß vor jedem Bett dem Gas Sauerstoff zugemischt wird.

3. Verfahren nach Anspruch 1, dadurch gekennzeichnet, daß der metalloxidreiche Katalysator hauptsächlich aus $Al_2O_3$ oder $TiO_2$ besteht.

4. Verfahren nach Anspruch 1, dadurch gekennzeichnet, daß man während des ersten Regenerierungsschrittes dem Regeneriergas ein $H_2S$-reiches Gas zumischt.

5. Verfahren nach Anspruch 1 oder einem der folgenden, dadurch gekennzeichnet, daß man einen Teilstrom des aus der Regenerierung kommenden Gases dem zu entschwefelnden Gas zumischt.

4

## Claims

1. A method for desulphurising a gas containing $H_2S$ and water vapour, in which the gas to be desulphurised, the content of $H_2S + SO_2$ of which is at least 1000 ppm, is initially passed through a catalytic preliminary purification stage at temperatures of 100 to 180 °C, with elemental sulphur being adsorbed on a catalyst rich in metal oxide, in that the $H_2S$-containing gas from the preliminary purification stage is then passed through a final purification stage containing activated carbon, in which oxygen is supplied to the gas to be desulphurised before the final purification stage, so that the gas contains 1 to 20 moles $O_2$ per mole $H_2S$, and the gas is passed over the activated carbon at temperatures in the range of 50 to 180 °C and a charge which contains elemental sulphur and consists of at least 3% by weight sulphuric acid is produced on the activated carbon, and in that for regeneration of the laden activated carbon and the laden catalyst rich in metal oxide a partial stream of the gas to be desulphurised is used as regenerating gas, with the regenerating gas in a first regeneration step being passed over the laden activated carbon at a temperature in the range of 100 to 180 °C and in so doing the sulphuric acid is largely reduced to elemental sulphur, and that in a second regeneration step the regeneration gas is passed over the activated carbon and the catalyst rich in metal oxide at temperatures in the range of 200 to 400 °C and in so doing the elemental sulphur is removed.

2. A method according to Claim 1, characterised in that the activated carbon is distributed over two beds through which the gas flows in succession, and that oxygen is admixed to the gas before each bed.

3. A method according to Claim 1, characterised in that the catalyst rich in metal oxide consists predominantly of $Al_2O_3$ or $TiO_2$.

4. A method according to Claim 1, characterised in that during the first regeneration step a gas rich in $H_2S$ is admixed to the regenerating gas.

5. A method according to Claim 1 or one of the following claims, characterised in that a partial stream of the gas coming from the regeneration stage is admixed to the gas to be desulphurised.

## Revendications

1. Procédé de désulfuration d'un gaz renfermant $H_2S$ et de la vapeur d'eau, qui consiste à envoyer le gaz à désulfurer, dont la teneur en $H_2S + SO_2$ est au moins égale à 1000 ppm, à des températures de 100 à 180 °C d'abord dans une épuration préalable catalytique, le soufre élémentaire étant adsorbé sur un catalyseur riche en oxyde métallique, et à envoyer ensuite le gaz contenant du $H_2S$ sortant de l'épuration préalable à un étage de purification finale contenant du charbon actif, de l'oxygène étant envoyé au gaz à désulfurer avant l'étage d'épuration finale de manière que le gaz contienne de 1 à 20 moles d'$O_2$ par mole d'$H_2S$, le gaz étant envoyé à des températures de l'ordre de 50 à 180 °C sur le charbon actif et il est produit sur le charbon actif une charge qui renferme du soufre élémentaire et qui est constituée pour au moins 3 % en poids d'acide sulfurique, un courant partiel du gaz à désulfurer étant utilisé comme gaz de régénération pour régénérer le charbon actif chargé et le catalyseur chargé, riche en oxyde métallique, le gaz de régénération étant envoyé dans un premier stade de régénération à une température comprise entre 100 et 180 °C sur le charbon actif chargé et l'acide sulfurique étant ainsi réduit dans une grande mesure en soufre élémentaire et, dans un second stade de régénération, le gaz de régénération étant envoyé à des températures de 200 à 400 °C sur le charbon actif et sur le catalyseur riche en oxyde métallique et le soufre élémentaire étant ainsi éliminé.

2. Procédé suivant la revendication 1, caractérisé en ce qu'il consiste à répartir le charbon actif en deux lits dans lesquels le gaz passe successivement et à ajouter de l'oxygène au gaz en amont de chaque lit.

3. Procédé suivant la revendication 1, caractérisé en ce que le catalyseur riche en oxyde métallique est constitué principalement d'$Al_2O_3$ et de $TiO_2$.

4. Procédé suivant la revendication 1, caractérisé en ce qu'il consiste à ajouter un gaz riche en $H_2S$ au gaz de régénération pendant le premier stade de régénération.

**5.** Procédé suivant la revendication 1 ou l'une des suivantes, caractérisé en ce qu'il consiste à ajouter au gaz à désulfurer un courant partiel du gaz venant de la régénération.

# Fig.1

# Fig.2